# EUROPEAN PATENT APPLICATION

(11) **EP 3 939 895 A1**
(43) Date of publication of application: **19.01.2022**
(21) Application number: 20185649.9
(22) Date of filing: 14.07.2020
(51) Int. Cl.: B64F 1/36, B64F 1/32, B62B 3/00

(54) **A SYSTEM AND METHOD OF HANDLING PIECES OF LUGGAGE**

(71) Applicant: BBHS A/S, 2640 Hedehusene (DK)
(72) Inventor: Bargum, Jonas Riddersholm, 5000 Odense C (DK); Paldavicius, Dovydas, 2300 København S (DK)
(74) Representative: Inspicos P/S

(57) **Abstract**

A system for handling luggage, such as in an airport. Luggage is provided from a delivery system having a first luggage moving band or rollers to a cart having a second luggage moving band or rollers, where the second luggage moving band does not move when luggage is not received thereby. In this manner, the distance between adjacent pieces of luggage on the second luggage

## Description

The present invention relates to a system and a method of handling pieces of luggage, and in particular to the interface between a central luggage handling system of an airport and the carts transporting the pieces of luggage between the central luggage handling system and the airplanes.

Relevant technology may be seen in WO2016/177886.

In a first aspect, the invention relates to a system for handling pieces of luggage, the system comprising:
- a delivery system comprising at least one first luggage moving element for transporting a number of pieces of luggage in a first direction,
- a cart comprising a second luggage moving element having a predetermined length and being positioned so as to receive pieces of luggage from the first luggage moving element, the cart being configured to move in relation to the delivery system so as to transport received luggage,
- a controller configured to synchronize the speed of the first and second luggage moving elements to control a distance between adjacent pieces of luggage on the second luggage moving element.

In the present context, the system may be provided as a number of elements configured to operate together. Preferably, the present system forms part of the luggage handling system of an airport, distribution centre, train station or the like. In the following, the invention will be described primarily transporting pieces of luggage. However, all types of goods, such a products, boxes of products, are equally relevant.

The delivery system may be a central luggage handling system of the airport or the like, which may be configured to handle a large amount of luggage and potentially has multiple delivery systems. The delivery system has at least one first luggage moving element, such as an endless belt, one or more driven rollers, a combination thereof or the like. The delivery system is configured to transport a number of pieces of luggage in a first direction.

A piece of luggage may be any type of luggage, such as a suitcase, but also merchandise and the like packed in boxes. Other types of luggage is sports equipment and other products which are often not packed in suitcases but in special purpose bags. Often, pieces of luggage are elements carried by persons for transport on the airplane/train or the like together with the person. Often, persons have one, two or three pieces of luggage. In a preferred embodiment, the pieces of luggage is the luggage which is not carried with the person in the passenger cabin but is to be transported in the hull or cargo bay of the airplane or the like.

The first direction preferably is a direction toward the second luggage moving element so that the luggage carried by the first luggage moving element is moved toward the second luggage moving element.

The first luggage moving element may be provided with or as an endless belt, driven rollers or combinations thereof for moving the pieces of luggage.

The number of pieces of luggage may be a number of pieces of luggage for which there is room or space on the cart at the same time. Naturally, the first luggage moving element may be configured to move luggage for multiple carts, such as a sequence of carts, one receiving luggage after the other.

In the present context, a cart is a vehicle or trailer configured to receive pieces of luggage and transport these from the delivery system to a receiving entity, such as an airplane or the like.

The cart is configured to move in relation to the delivery system. Thus, the cart may comprise wheels, belts or the like allowing the cart to move, such as drive, in relation to the delivery system which often is stationary.

A cart may be a legacy cart with a tractor unit pulling one or more carts as trailers. This tractor unit may be autonomous or controllable by a person. Preferred carts are self-propelled and more preferably autonomous, so that the carts may find their way from the delivery system and/or the first luggage moving element and to a delivery position, such as another luggage moving element. When the cart is autonomous, it may be configured to automatically move to the delivery system and receive luggage therefrom, transport the luggage to a delivery position and deliver the received luggage at the delivery position, such as at an airplane, without human intervention or at least without a human lifting or carrying the luggage.

The cart may comprise a power source for delivering power to any actuators or motors configured to move the second luggage moving element(s) and the cart as well if self propelled. Clearly, the power source may be fuel for a combustion engine or fuel cell, or a battery, solar cells or the like for providing power to electrically driven actuators.

The cart has a second luggage moving element with a predetermined length. The second luggage moving element may comprise one or more endless belts and/or driven rollers. The predetermined length is a total length of the element on which the luggage may be received. Often, the length is determined along a predetermined direction or in a predetermined plane where the second luggage moving element is configured to transport the luggage along the plane or direction. The predetermined length may be along a predetermined direction and from an extreme end of a belt or an extreme roller along the direction and to an extreme end of a belt (or the belt) or an extreme roller in an opposite direction.

Preferably, the predetermined length is longer than that of a single, standard piece of luggage. Often the predetermined length exceeds 1m, such as exceeds 2m, such as a length of 3-10m, such as 3-6m.

The second luggage moving element preferably is formed by a single belt extending over the predetermined length.

Preferably, the cart comprises a plurality of second luggage moving elements, such as a plurality of second luggage moving elements each defining a direction, where the directions of the second luggage moving elements of the cart preferably are at least substantially parallel.

In the same manner, the delivery system may comprise a plurality of first luggage moving elements, such as where each first luggage moving element of the delivery system defines a direction and where the directions of the first luggage moving elements of the delivery system are at least substantially parallel. In this manner, the second luggage moving elements, when multiple are provided, of the cart may be loaded or may receive luggage in parallel or simultaneously. This provides a faster loading.

The second luggage moving element is positioned so as to receive pieces of luggage from the first luggage moving element. Thus, the luggage moved by the first luggage moving element is fed from the first luggage moving element on to the second luggage moving element. This may be obtained if the first luggage moving element has a luggage delivery position, such as an extreme roller or an extreme end of a belt, at which the second luggage moving element is positioned so that when the luggage leaves the first luggage moving element, it may move on to the second luggage moving element. A distance of less than 30cm, such as less than 20cm, such as less than 10cm, such as less than 5cm, such as less than 3cm may exist between the first and second luggage moving elements.

In a preferred embodiment, the first and second luggage moving elements each define a direction, where the two directions are at least substantially provided in a common plane, such as a vertical plane. Then, the first luggage moving element may have the luggage delivering position and the second luggage moving element may have a luggage receiving portion, which may also be an extreme roller or extreme end of a belt, where the luggage delivering position and the luggage receiving portion are positioned so that luggage may travel along the directions in the plane and from the one moving element to the other. The luggage receiving portion may be at the same height or a lower height than the luggage delivering position.

The system further comprises a controller configured to synchronize the speed of the first and second luggage moving elements to control a distance between adjacent pieces of luggage on the second luggage moving element.

It is an object of the invention to facilitate automatic transport of the luggage from the first to the second luggage moving element.

An advantage of the luggage moving elements over e.g. chutes is that non-driven luggage transport has a higher probability of the luggage rotating and getting stuck. A challenge with the driven moving elements is that they have a finite length and that continued rotation/movement thereof will make the luggage travel the extent of the moving element and finally may fall therefrom, which is highly problematic.

Naturally, the second luggage moving element may comprise a number of individually driven rollers or belts where a piece of luggage may be received and brought to an end of the second luggage moving element and parked at that position while later received pieces of luggage may be received and parked sequentially along the second luggage moving element. This, however, requires individual controlling of each roller/belt.

In a preferred embodiment, the second luggage moving element is controlled by a single signal so that all luggage on the luggage moving element moves in concert. In one embodiment, the second luggage moving element is formed by a single belt. Alternatively, a number of belts and/or rollers may be used, where all are always moved/rotated at the same time.

The operation of the controller is to ensure that the speeds of the first and second luggage moving elements are synchronized so that a distance between the adjacent pieces of luggage may be controlled. Controlling the distance means that the distances may be kept low so that a maximum number of pieces of luggage may be received by the second luggage moving element.

Clearly, if the second luggage moving element receives a first piece of luggage and then continues to move this piece of luggage without receiving more luggage until e.g. the luggage has moved ½-1m along the second moving element, the distance between the two pieces of luggage is so large that another piece of luggage would have fitted on the second luggage moving element.

Thus, in one embodiment, the controller is configured to control the movement of the second moving element so that the second luggage moving element does not move even though the first luggage moving element moves but where no luggage is transferred from the first to the second luggage moving element. Thus, the first luggage moving element is allowed to move without the second luggage moving element moves. The second luggage moving element moves only when luggage is received. Thus, any distance between pieces of luggage received on the second luggage moving element may be controlled.

In this context, luggage is transferred when positioned on/over or engaging both the first and second luggage moving element.

In one embodiment the controller is configured to control the second luggage moving element to move at a lower speed than a speed with which the first luggage moving element moves. If this controlling takes place during transfer of luggage from the first to the second luggage moving element, any space between the previously received piece of luggage and the presently transferred piece of luggage may be reduced or even removed.

In one embodiment, the controller is configured to brake the second luggage moving element when luggage is transferred from the first luggage moving element to the second luggage moving element. In this situation, the luggage transferred from the first to the second luggage transporting element may drive the second luggage transporting element. The second luggage transporting element need not be driven in that situation. Braking, such as only slightly, may allow the luggage to drive the second luggage moving element in a manner so that the second luggage moving element, when the luggage is transferred, will not by itself continue the movement. This braking may be inherent in friction in the second luggage moving element so that the controller need merely not instruct the second luggage moving element to move.

The luggage may drive/push the second luggage moving element when engaging both the first luggage moving element and the second luggage moving element either directly or indirectly via another piece of luggage already received on the second luggage moving element.

In one embodiment, the delivery system comprises a first detector configured to detect luggage. This detector may be used for determining when luggage is received so that the operation of the second luggage moving element may be controlled. This detector may be positioned at any position in the delivery system, especially if the subsequent location of the luggage is known, such as tracked. Then it may be estimated when the luggage arrives at the second luggage moving element, which may then be controlled accordingly. In one situation, the detector is positioned at the first luggage moving element, such as at a delivery end or portion thereof.

In one embodiment, the cart comprises a second detector configured to detect presence and/or a position of one or more pieces of luggage on the second luggage moving element. An output of this sensor may be used for controlling the movement of the second luggage moving element. If the sensor is at an input end or portion of the second luggage moving element, the sensor output may define when luggage is received and thus when the second luggage moving element should move. A sensor at an output or other end of the second luggage moving element may define when the second luggage moving element is full and should not be moved more at least for receipt of additional pieces of luggage.

In one embodiment, the controller is configured to control the first and second luggage moving elements to obtain a distance between adjacent pieces of luggage of no more than 10cm, such as no more than 5cm. In this manner, the space on the second luggage moving element may be optimized. Then, a minimum of carts are required for moving a predetermined number of pieces of luggage from e.g. a terminal to an airplane or vice versa.

When the cart is able to move in relation to the delivery system, the cart and/or delivery system preferably is capable of adapting its position so that the desired relative positioning of the first and second luggage moving elements may be obtained to facilitate transport of luggage. Preferably, the cart and/or delivery system is configured to move so that the first and second luggage moving elements are within 10cm from each other

Naturally, it may be desired that the cart is able to perform all position adaptations as it is configured to move in the first place.

However, in one embodiment, the cart is configured to move, relative to a predetermined coordinate system, such as a fixed base of the delivery system or the earth, in one direction along a first axis and the delivery system, such as the first luggage moving element, is configured to move in another direction along another axis not parallel to the first axis. Not parallel means that an angle between the directions is higher than 0 degrees, such as in the interval of 20-160 degrees, such as 80-100 degrees. The first direction may be horizontal or at least substantially horizontal and the other direction may be vertical or at least substantially vertical.

In another situation, the cart may be configured to move along a longitudinal direction thereof, such as a main driving direction, where the delivery system, such as the first luggage moving element, may be configured to move in a horizontal direction perpendicular to the main driving direction, such as a direction toward the cart.

In order to obtain the desired relative positioning of the first and second luggage moving elements, it may be desired to provide a sensor for determining this relative positioning.

Different sensing technologies may be employed. Longer range sensing may be based on vision technologies, 2D/3D vision, Lidar, sonar, GPS or the like, where shorter range sensing may be performed using also or alternatively magnetic or mechanical sensors.

Shorter range sensors may be provided between the first and second luggage moving elements, for example, as the relative positioning there between may be desired relatively precise. A magnet and a Hall sensor, for example, where one is provided on the delivery system/first luggage moving element and the other on the cart/second luggage moving element, is rather short range but may be used for a rather precise relative positioning. The output of the coil/sensor may be used for both determining the distance but also, if multiple coils/sensors are provided, an angle.

As the carts are able to move, these preferably comprise a drive unit, often a motor or engine. Also, the carts may comprise navigation elements, such as rotatable wheels or the like allowing the cart to move to any desired and required location. Further, the carts may be not only self propelled but autonomous, so that carts may comprise navigation sensors, processors and the like for determining a position of the cart as well as potentially detecting obstacles. Autonomous carts may be able to detect and avoid obstacles while navigating to the desired location which may be the delivery system or a luggage receiving position.

Thus, different position determining techniques may be employed when the cart is navigating and when the cart is docking or positioning itself relative to the delivery system. When the cart is navigating, the positioning precision need not be as high as when docking. Known the cart position within 10cm, 20cm or 30cm is sufficient when the cart is moving around in the space around an airplane, as a sufficient safety distance may be provided between the airplane and the desired path of the cart.

However, when the cart is to move into position to receive luggage, a higher precision may be desired. Thus, different position detectors may be used for navigation and docking.

When docking, the cart may comprise one of a camera and a target element or illustration, such as a number of concentric circles, which may be used by the cart to move into the correct position vis-s-vis the delivery system. Alternatively, a lidar/radar/sonar may be used for determining a relative positioning between the cart and delivery system.

The relative position may be between the cart and the delivery system and/or between the first and second luggage moving elements. If multiple sets of first and second luggage moving elements are provided, separate sensors or detectors may be provided for each set.

Naturally, the sensor(s) may be provided on the cart and/or the delivery system. If the cart is the moving entity and the sensor(s) is/are provided on the delivery system, the delivery system may output information to the cart as to how to move to arrive at the desired position. The cart then may be configured to receive information and move or reposition correspondingly. Alternatively or additionally, the cart may output position information to the delivery system which may then move or reposition the first luggage moving element accordingly.

Naturally, the delivery system may be configured to determine or receive information relating to parameters of the individual pieces of luggage. In this manner, pieces of luggage may be selected for a second luggage moving element based on a number of considerations. In one situation, luggage may be selected having a combined length being smaller than but as close as possible to the length of the second luggage moving element.

In another situation, luggage for a cart (one or more second luggage moving elements) may be selected to have a combined weight below a threshold weight.

In another situation, the weight of each piece of luggage may be determined or received, as may the position of each piece of luggage on a second luggage moving element. Then, the order of loading the pieces of luggage on to the second luggage moving element may be adapted. In addition or alternatively, the second luggage moving element may be moved in one or the other direction to re-position the pieces of luggage in relation to the remainder of the cart. In this manner, the balance of the cart or luggage moving element may be optimized so that the cart has a centre of mass inside a determined area, such as close to a centre thereof. In this manner, the probability of the cart tipping over when e.g. turning is reduced.

Then, an order of loading the pieces of luggage on to the cart and/or the (individual) second luggage moving element may be determined and the luggage selected in that order. This order may be selected based on desired parameters of the second luggage moving element or the cart or based on an order in which the pieces of luggage are unloaded from the cart and second luggage moving element(s).

Thus, the manner of unloading the cart may be taken into account. As is the situation in relation to the loading of the cart, the unloading may be performed, if multiple second luggage moving elements are provided, sequentially, in parallel or in any desired order.

In one situation, the heaviest or largest pieces of luggage are selected to be loaded first. Such pieces of luggage may be loaded at lower second luggage moving elements to increase the handling capabilities of the cart when moving.

The heaviest/largest pieces of luggage may also be positioned, on the second luggage moving element(s) so as to be unloaded first, so that these may be loaded on to an airplane or other carrier first. It may be desired to provide, in the carrier, such pieces of luggage at the bottom and provide thereon smaller/lighter pieces of luggage.

In an extreme situation, the order or pattern of loading or stacking the luggage in the carrier may be determined on beforehand and the pieces of luggage may be loaded onto or at least unloaded from the cart in an order allowing the pieces of luggage to be stacked or stored in the order and pattern, such as ensuring maximum utilization of the cargo space in the carrier.

Further, other parameters of the individual pieces of luggage may be taken into account, such as the destination (often an airport), whether the next destination is a transit location, or the priority of the passenger/luggage may be taken into account. In this manner, the high priority luggage or luggage which for other reasons needs to quickly be unloaded from the carrier, may be loaded on to a cart at a point in time or on a particular cart which is unloaded late in the loading process so that the pieces of luggage on that cart are loaded into the carrier the latest, as the latest loaded luggage often is unloaded first.

Then, the system may comprise, in addition to the delivery system, a receiving station configured to receive the pieces of luggage loaded on to the cart. The cart may be configured to move from the delivery system to the receiving station.

The receiving station may be configured to receive the pieces of luggage and may have an overall structure as the delivery system. Thus, the receiving station may have one or more luggage receiving elements and may be able to, together with the cart, arrive at a desired relative positioning so that the pieces of luggage may be delivered to the receiving station.

The receiving station may then be configured to deliver the pieces of luggage onto or into a carrier, such as an airplane or a luggage receiving portion in an airport.

The same manner of obtaining the relative positioning, using the sensors or any other manner, described above is equally valid in relation to the receiving station.

Another aspect of the invention relates to a loader/unloader comprising:
- a base,
- a first luggage moving element,
- an actuator configured to move the first luggage moving element relative to the base,
- a sensor for detecting a relative position between the first luggage moving element and a second luggage moving element,
- a controller configured to receive an output of the sensor and activate the actuator to move the first luggage moving element toward the second luggage moving element.

All aspects, embodiments, situations and the like described herein may be combined in any desired manner.

This loader/unloader may form part or all of the delivery system or receiving station.

In this respect, the base may be a portion fixed to the ground. Alternatively, the base may be movable, such as if provided with wheels or belts, so that the loader/unloader may move in relation to the surroundings, such as to be positioned in relation to a cart or a carrier, such as an airplane. Naturally, then the loader/unloader may be self propelled, autonomous or pulled by a tractor unit.

The actuator may be any type of actuator, such as a pneumatic or hydraulic actuator, an electric motor, a linear actuator, rotating actuator or the like. Any number of actuators may be employed and any type of actuator may be used and any type of power or fuel may be desired for the actuator.

The sensor may be based on any sensor technology. The sensor may be based on vision, such as 2D vision, stereo vision, 3D vision or the like. Alternatively, a radar/lidar/sonar may be used. Other sensor types, such as magnetic sensors, mechanical sensors (push buttons, levers or the like) may be used. The sensor may be configured to determine an angle between the first and second luggage moving elements, such as between predetermined directions thereof, so that the actuator may be operated accordingly. Additionally or alternatively, the sensor may be configured to determine a distance between the first and second luggage moving elements so that the actuator may be operated accordingly.

The controller may be configured to receive the signal or output of the sensor (multiple sensors may be used) and control the actuator. The controller may be configured to determine an operation of the actuator to bring the first luggage moving element to a first position vis-a-vis the second luggage moving element. In addition, the controller may be configured to output information, such as to the cart, to move in a predetermined manner relative to the base, so that the distance or relative position between the first and second luggage moving elements is adapted.

The loader/unloader may be configured to move the first luggage element vis-à-vis the base. This movement may be in 1, 2 or 3 dimensions.

In addition to the actuator configured to move the first luggage moving element vis-à-vis the base, other actuators may be desired for moving the base in relation to the surroundings, such as if the loader/unloader is self-propelled.

Another aspect of the invention relates to an assembly of the loader/unloader according to the former aspect of the invention and a cart comprising the second luggage moving element, wherein the controller is configured to output controlling information and the cart is configured to receive the controlling information and control the cart to move so as to bring the second luggage moving element in relation to the first luggage moving element.

In addition, the controller may be configured to output information based on which the second luggage moving element may be moved in relation to e.g. a base or driving portion of the cart. As mentioned above, it may be desired that the cart is able to move in one direction where the first luggage moving element is configured to move in another direction. Then, it may be desired that the second luggage moving element is configured to move in a third direction vis-à-vis the base of the cart.

As mentioned above, the cart and loader/unloader may comprise multiple luggage moving elements where a first luggage moving element is configured to engage or receive luggage from or deliver luggage to a corresponding second luggage moving element.

Naturally, when loading luggage, the loader may be configured to operate as described above.

When unloading luggage from a second luggage moving element, the unloading and thus the operation of the second luggage moving element may be controlled by the unloader.

The unloader may be configured to deliver the received luggage into e.g. a carrier. Alternatively, luggage from e.g. a carrier may be delivered to a luggage handling operation of an airport. The unloader thus unloads the cart and delivers the luggage to this operation. This delivery may represent a bottleneck so that the unloading of the second luggage moving element may be controlled by the capacity or capability of the delivery to the carrier. The first luggage moving element may have a simple detector configured to determine when the first luggage moving element has space for more pieces of luggage, where after a second luggage moving element may be allowed to deliver one or more pieces of luggage to the first luggage moving element.

In one embodiment, the unloader comprises the same number of first luggage moving elements as the number of second luggage moving elements on the cart. If the first luggage moving elements are capable of receiving all pieces of luggage transported on each corresponding second luggage moving element, the cart may be completely unloaded by simultaneously unloading all second luggage moving elements. Then, the cart may immediately there after move to another location such as for receiving new pieces of luggage.

Naturally, if multiple first luggage moving elements are provided, the luggage from these elements may be transported via multiple conveyors or may be combined into e.g. one conveyor and then transported to the carrier.

As mentioned above, a particular order may be determined for unloading the cart. This order may be fed to the cart when loading the cart and then to the unloader (or simply via an overall controller) for ensuring the correct order of the pieces of luggage unloaded to the carrier. The unloader thus may be configured to receive information relating to an order of unloading and then unload the pieces of luggage in that order.

Another aspect of the invention relates to a method of handling pieces of luggage, the method comprising:
- a first luggage moving element transporting a number of pieces of luggage in a first direction,
- a second luggage moving element, provided on or at a cart, receiving the pieces of luggage from the first luggage moving element while a controller synchronizes the speed of the first and second luggage moving elements to control a distance between adjacent pieces of luggage on the second luggage moving element,
- subsequently, the cart moving in relation to the delivery system so as to transport received luggage.

Clearly, all aspects, embodiments, situations and considerations may be interchanged. All above considerations of the aspects of the invention are equally valid in this respect.

The first luggage moving element may be configured to move the pieces of luggage in a predetermined direction. Often, the first luggage moving element comprises one or more belts or rollers or combinations thereof. Belts/rollers are normally configured to move luggage in one or both of two oppositely directed directions.

The second luggage receiving element usually would be positioned in the first direction in relation to the first luggage moving element, such as at an end of the first luggage moving element so that luggage leaving the first luggage moving element will be delivered on or to the second luggage moving element.

The first luggage moving element may be configured to transport any number of pieces of luggage. Often, the pieces of luggage are transported sequentially.

The controller synchronizes the speed of the first and second luggage moving elements as described above so that a distance between the pieces of luggage on the second luggage moving element is as desired. As mentioned above, it may be desired that this distance is not too large.

After being loaded, the cart will be moving so as to transport the luggage.

In one embodiment, the controller controls the movement of the second luggage moving element so that the second luggage moving element does not move when the first luggage moving element moves if no luggage is transferred from the first to the second luggage moving element. Then, the first luggage moving element may be allowed to move as long as no luggage is transported thereby.

In one embodiment, the controller controls the second luggage moving element to move at a lower speed than a speed with which the first luggage moving element moves. This is especially relevant when luggage is transferred between the first and second luggage moving elements, as this will decrease any distance between the luggage transferred and previously received luggage.

In one embodiment, the controller brakes the second luggage moving element when luggage is transferred from the first luggage moving element to the second luggage moving element. As mentioned above, the second luggage moving element may then be pushed or driven by the first luggage moving element via the luggage being transferred.

In one embodiment, the synchronizing step comprises a first detector detecting luggage at or on the first luggage moving element. This detector may be positioned at any position of the first luggage moving element. Often, when the position of a piece of luggage is known at one point in time, the position may be estimated at future points in time when the movement of the moving element is known.

In one embodiment, the synchronizing step comprises a second detector detecting presence and/or a position of one or more pieces of luggage on the second luggage moving element. This detection may be used for ascertaining that the luggage has been transferred or for determining when a second luggage moving element is full.

In one embodiment, the controller controls the first and second luggage moving elements to obtain a distance between adjacent pieces of luggage no more than 10cm, such as no more than 5cm.

In one embodiment, prior the transporting step, the cart moves, relative to a predetermined coordinate system, such as the earth, in one direction along a first axis and the delivery system, such as the first luggage moving element, moves in another direction along another axis not parallel to the first axis. Thus, the relative positioning of the first and second luggage moving elements prior to the luggage hand-over may be obtained using not only one but both of the cart and the delivery system or first luggage moving element.

Another aspect of the invention relates to a method of operating a loader/unloader, such as a loader/unloader as described above, the loader/unloader comprising:
- a base,
- a first luggage moving element, and
- a sensor,
the method comprising:
- the sensor for detecting a relative position between the first luggage moving element and a second luggage moving element and
- moving the first luggage moving element toward the second luggage moving element.

The sensor, as described above, may be based on any sensing technology. The sensor may output a signal relating to a distance, a direction or both between the first and second luggage moving elements. The movement of the first luggage moving element may then be performed to alter or reduce the relative position between the first and second luggage moving elements to a predetermined relative position or within an acceptable interval of relative position.

Having obtained the desired relative position, the luggage hand-over may commence.

In one embodiment, the second luggage moving element is provided on a cart, the method further comprising the step of the loader/unloader outputting controlling information and the cart receiving the controlling information and the cart moving so as to bring the second luggage moving element toward the first luggage moving element. In this manner, the desired relative position is obtained by both the cart and the loader/unloader moving.

In addition to the above features, additional advantages may be seen when information is derived relating to the luggage transported by the cart. Not only dimensions but also colour, shape, owner, destination, priority and the like may be determined.

This information may as described be used for determining how to load and unload the cart, but the information may also be used for ensuring that all pieces of luggage are loaded on to the cart and on to the carrier - and from the carrier on to the cart and to the receiving system.

Owner ID, destination and/or priority and the like may be determined using RFID/NFC, sensing the luggage tags, and suitable sensors.

Colour, shape, dimensions and the like may be determined using cameras.

Priority may be determined based on tags, chips, plates, stickers or the like provided on or in the luggage.

Thus, a number of the sensors already provided may be used for this purpose.

It is seen that if a sequence of pieces of luggage is expected, where a small yellow suitcase is expected between a large yellow suitcase and a brown box. Thus, the owner ID may not be required known, as long as a sequence of such luggage is detected to/from the carrier.

Thus, more information relating to the luggage may follow the luggage from the airport to the carrier and from the carrier to the next airport. The information may be transported via a central controller or via the cart, so that it may be determined from cart to cart that all luggage received is also delivered (and not dropped during transport).

In the following, preferred embodiments of the invention will be described with reference to the drawing, wherein:
- Figure 1 illustrates a system according to the invention used in an airport,
- Figure 2 illustrates a cart for use in the system of figure 1 and
- Figure 3 illustrates a first and a second luggage moving element handing over luggage.

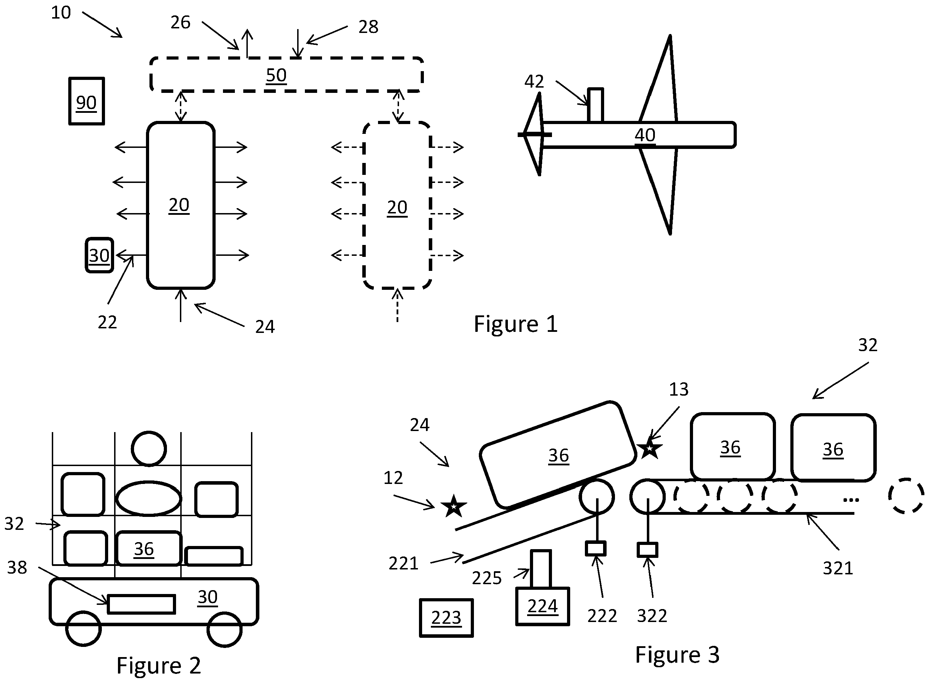

In figure 1, a system 10 is illustrated for handling luggage in an airport. The system comprises a central storage facility 20 capable of receiving and holding a plurality of pieces of luggage. The facility 20 may be based on any technology such as a revolving belt, a pater noster system, racks or the like holding the luggage in a matrix fashion or the like.

The facility 20 has a plurality of outlets 22 from to which luggage may be fed and loaded on to carts 30 for transporting the luggage to an airplane 40.

In the preferred embodiment, the carts 30 are autonomous in the sense that when provided with a destination, they will be able to navigate to the destination without human assistance. In another embodiment, the carts are self propelled and remotely navigated by a controller 90.

Different types of aircraft take the luggage in different manners. Smaller aircraft require the luggage provided as individual pieces of luggage whereas larger aircraft are configured to receive containers in which a number of pieces of luggage are provided.

A controller 90 is provided for controlling the operation of the storage facility 20, the outlets 22 and the carts 30.

The agility of the system may depend on the time it may take for the luggage to move from the storage facility to the outlet. If this time is too long, the cart may have to wait, or the luggage may have to be ordered for the whole airplane, which could block one or more outlets until all the luggage therein has been picked up by carts. On the other hand, if the distance from the outlet to the airplane is too large, the carts will use a lot of time driving, so that each cart will be able to transport fewer pieces of luggage per hour. Thus, it may be desired to provide multiple storage facilities 20 so that these may be positioned strategically in larger airports, such as closer to the gates or the airplanes. Thus, the delivery time from the storage facility to the outlet may be smaller and the distance from the outlet to the airplane may be smaller.

Then, a remote storage facility 50 may be provided for receiving the luggage from the check-in counters 28 and forwarding the relevant luggage to the individual storage facility 20. Usually, luggage check-in must be completed so much in advance that there is ample time to transfer the luggage from the remote storage facility to the central storage facility.

If no remote storage facility is provided, luggage from the check-in counters may be fed directly to the storage facility 20.

Clearly, all other operations of airports, such as luggage security scanning, may be performed at any path along the path of the luggage, such as at the remote storage facility if provided.

The controller 90 may receive an instruction that an airplane 40 is ready for receiving luggage and may then select an empty or available outlet, select an empty cart, instruct the empty cart to navigate to the selected outlet and instruct the storage facility 20 to forward a first batch of luggage to the selected outlet. Loading and unloading of carts is generally described in WO2016/107844.

Clearly, the airplanes should also be unloaded, and the carts may be used for that purpose also. An input 24 may be provided into the storage facility 20 to which luggage unloaded from airplanes may be fed to the storage facility. Such luggage may be destined for this airport and thus fed to an output 26 to a baggage reclaim area of the airport, potentially via the facility 50. Alternatively, the luggage may be in transit to be loaded on to another airplane, whereby the luggage may be fed to and stored in the storage facility 20 or the remote storage facility 50 for later transport to the correct storage facility, outlet, cart and airplane.

The carts may be fully autonomous in the sense that they are provided with a destination, such as an outlet, inlet, airplane, loading ramp 42, GPS coordinate or other position in the airport, where after the cart may find its own way there. Naturally, corridors, paths, roads or the like may be defined in the airport along which the carts should or must move. Traffic rules may be defined for maximum velocity, minimum velocity, how to act at intersections (the right of way) and the like. Autonomous carts usually have one or more sensors for determining the position of the cart and/or obstacles in the vicinity of the cart. Such sensors may be based on GPS, Radar, Lidar, Sonar, stereo vision, vision using structured radiation, beacons, markings or signal emitters on/in the ground or the like. The carts may be in communication with each other or the central processor to inform if obstacles are detected, which could also be problematic to other carts, what a particular position of e.g. an airplane or its loading ramp is, if this is not standardized, and the like. Congestion at intersections or busy portions of the airport may be reported or determined so that some carts may decide to take an alternative route to avoid such congested spots. The carts may comprise sensors configured to ensure correct positioning of the cart vis-à-vis an outlet, inlet, airplane or the like to facilitate automatic loading and unloading of the luggage from/to the cart.

The carts may operate according to a "just in time" principle, where the luggage for a cart is received while the cart is on the way to the output. In that manner, the luggage does not have to wait at the output and thus risk blocking the output, and the cart will not have to wait at the output also potentially blocking the output and reducing the efficiency of the cart. Such "just in time" principle may be seen from Applicant's co-pending application filed on 11 June 2020 with application number EP20179529.1.

As mentioned, different cart types may be used. In figure 2, a cart 30 is illustrated which has a rack comprising a number of reception spaces 32, which may each comprise an endless belt 321 so that each space may comprise a plurality of pieces of luggage 36 extending, in the drawing, along an axis perpendicular to the plane of the drawing. An alternative to the belt is rollers, such as driven, rotating rollers.

When the cart is ready to receive luggage, this luggage is provided to a predetermined one of the spaces 32 by a belt 221 of the output 22, see figure 3. The belt 221 and/or 321 may be exchanged by driven rollers. The belt 221 will deliver the luggage to the belt or rollers 321.

Naturally, the output 22 may comprise a number of belts 221 arranged with the same structure as the spaces 32 of the cart so that parallel transfer of luggage from the belts 221 to the spaces 32 may be obtained. In this manner, a swift loading is obtained. Alternatively, the belt 221 may load each belt 321, if multiple are provided, sequentially - or even move between belts 321 to ensure the correct ordering of the pieces of luggage on the belts 321.

However, as the belt 321 will have a limited length and as it is desired to optimize the amount of luggage handled by the cart, it is desired that the distance between adjacent pieces of luggage 36 is controlled.

Then, it is desired that the belt 321 only moves when a piece of luggage 36 is received, as the former piece of luggage would be moved too far from the next piece of luggage generating a large gap or distance between the two pieces of luggage.

For this reason, it is desired to synchronize the velocities of the belts 321 and 221 - especially at some points in time.

One or more sensors 12 may be provided for determining a position, such as a first portion and/or a last portion of a piece of luggage. The sensors may be of any type, such a simple optical beam to be broken by the piece of luggage, image based detection or the like. The sensor may be provided for sensing the position (such as front or back portions) of a piece of luggage on the belt 221. In this manner, the belt 221 may be controlled in a manner so that the position of the luggage is known until this piece of luggage engages the belt 321. Then, the movement of the belt 321 may also be controlled so that the new piece of luggage is provided at a predetermined distance to, such as abutting, the former piece of luggage on belt 321.

Alternatively or additionally, a sensor 13 may be provided at the belt 321, such as at the inlet end of the belt 321. In this manner, the belt 321 may be allowed to move only if a piece of luggage is sensed. Thus, the belt 321 will move when receiving a piece of luggage and will stop as soon as this piece of luggage has passed the position of the sensor. If a new piece of luggage is subsequently received, the belt 321 will move again. In this manner, the distance between the pieces of luggage on the belt will be controlled.

It may be desired that when a piece of luggage is transferred from belt 321 to belt 221, the belt 221 moves a fraction slower than the belt 321 so as to close any gap between the piece of luggage transferred and the former piece of luggage on the belt 221. A larger gap may, however, make identification of individual pieces of luggage easier.

In one situation, the movement of the belt 321 may be generated by the piece of luggage delivered by the belt 221 - and thus by the belt 221. When the belt 321 itself is not driven but simply allowed to move freely or only slightly damped, the piece of luggage 36 being received on the belt 321 will be pushed by the belt 221 to confer a force and thus torque from the belt 221 to the belt 321 via the piece of luggage. Once this piece of luggage as disengaged the belt 221, it will move no more, but may be pushed by the next piece of luggage to be received by the belt 321. This next piece of luggage will push the former piece of luggage and will, as a result thereof, make the belt 321 move to make space for the next piece of luggage.

In general, when the cart 30 moves with the luggage, the belts may be locked or prevented from moving to ensure that the luggage does not fall from the cart.

It is clear from the above that a large number of manners exist of controlling the relative movements of the belts 321 and 221 to control the spaces between adjacent pieces of luggage.

As mentioned, one belt 221 may feed each space 32, if multiple spaces are provided. Alternatively, each space 32 may be fed by a separate belt 221 to increase the loading speed.

When synchronizing the movement of the belts 321 and 221, it is desired that either the same controller controls both belts or a communication is performed by a controller, such as controller 38 controlling the belt 321 and a controller, such as a controller 223 controlling the belt 221. This communication may be performed wirelessly, such as via Bluetooth, WiFi, GSM, radio communication, optically or the like. Clearly, but not preferred, a cabled connection may be provided.

Such communication may be provided using elements 222/322 or elements positioned on the cart and in relation to the output 22. Usually, this communication is two-way in the sense that the cart may transfer information to the output and the output may transfer information to the cart.

It is preferred that the belt 321 is the controlling factor when it is the receiving entity. Thus, if the belt 321 is full, no more luggage should be received. Also, it may be desired to control the velocity and/or movement of the belt 221 in relation to that of the belt 321, when the belt 321 receives luggage.

In order to ensure safe loading of the luggage 36 from the belt 221 to the belt 321, the relative positioning of the belt 321 vis-à-vis the belt 221 may be controlled.

The cart 30 preferably is self propelled and even more preferred autonomous, so that it may be parked in the vicinity of the output 22. The cart 30 may be provided with means for determining a desired position vis-à-vis the output 22 and/or belt 221, such as using a vision system or a homing system or targeting system by which the cart 30 may determine the position of the belt 221 or the output 22 and move and park in a desired position in relation thereto. A vision system may be configured to recognize the belt 221 or an element, such as a visible and easily recognizable target, such as a number of concentric circles. Alternatively, a homing system may comprise one or more beams of electromagnetic radiation for the cart to navigate in relation to. Such beams may be very narrow in width so that the final position of the cart is well defined, preferably within ±10cm, such as within ±5cm, such as within ±2cm, such as within ±1cm.

Multiple manners of positioning may be provided, such as a longer ranging, more coarse positioning or navigating technology and another, short range and more precise technology. A short range technology may be the emission of a magnetic field by one of the belt/output and the cart, such as around the belt 321, so that a sensor of the other of the belt/output and the cart may output a signal used for moving the cart or belt to obtain a final, desired position.

In figure 3, two portions of a homing or targeting system is seen, where the portion 222 is provided on the belt 221 or output 22 and the portion 322 is provided on the belt 321 or the cart 30.

This homing or targeting system may be defined between the output 22, such as the belt 221 and the belt 321, so that it is possible to position the belt 221 correctly in relation to the belt 321. Portions 322 may be provided at each belt 321 so as to be able to position the belt 221 correctly in relation to each belt 321. Alternatively, the system may be defined between the cart and the output, such as if the output has multiple belts, which are then correctly positioned vis-à-vis the belts of the cart.

The homing or positioning system used for positioning the cart vis-à-vis the output 22 may be different from any system used by the cart when navigating from the output 22 to the airplane, as this other navigation may require less precision.

To obtain the desired relative position, one or both of the output and the cart may be movable in relation to the other. The output or the belt 221 may be movable both vertically and horizontally, in relation to a base 224 and via an actuator 225, both toward the cart and in a direction perpendicular to the belts 321, so that as long as the cart is parked in the vicinity, the last position adaptation may be taken care of by the belt 221. Belt loaders which are able to handle such relative movement or adaptation may be seen in e.g. EP3569526, which is hereby incorporated by reference.

The belt 221 thus may be configured to be movable to be positioned correctly or sufficiently in relation to the belt 321. Alternatively, the cart may be able to perform the correct positioning. Further alternatively, both the cart and the belt 221 may be able to reposition, such as when the cart is able to move in the horizontal direction and the belt 221 in the vertical direction so that a coordinated movement is performed to arrive at the desired relative position.

Even though the sensor, such as a vision camera or the like, is positioned on one of the cart and the belt 221 or output 22, a communication may be performed between the cart and the controller controlling the belt so as to arrive at the desired relative position.

Having received the luggage, the cart will be moved to the airplane 40, such as to an unloading position close to the loading ramp 42. In this manner, a relative positioning may again be desired, if the ramp 42 comprises one or more belts for receiving the luggage. In this manner, the reverse may take place, where the luggage is delivered by the belt 321 to the belt of the ramp.

The relative positioning of the cart or belt(s) vis-à-vis the ramp 42 and one or more belts thereof may be as described above.

Now the ramp 42 may call for luggage in the sense that when the ramp is able to receive luggage, it may operate its belt while the cart belt 321 moves to deliver luggage to the ramp belt. In this situation, the ramp belt is the receiving element and may thus control the belt 321 to only deliver luggage when the ramp has room for it.

Naturally, the process may be reversed so that the cart actually receives the luggage from the ramp of an aircraft and delivers it to an input 24 for delivery to the system 20 and then to the passengers or a connecting flight.

Once the cart is empty, it may return to an outlet 22 to receive a new group of luggage - or it may move to a ramp of another aircraft to receive luggage for the input 24.

With the synchronization, the space between the pieces of luggage may be controlled, so that the amount of luggage on the cart may be optimized.

Actually, luggage from the output may be fed to a cart via another cart. Luggage for two carts may be provided to an output and the luggage for one belt 321 may be fed to the first belt 321 of the first cart and further to the belt of the other cart, when the other cart is parked so that the belts/rollers thereof are aligned. Thus, the belt 321 of one cart may be the loading belt and that of the next cart may be the receiving belt. The belt of the first cart then is controlled together with that of the last cart. The belt of the first cart may then move without that of the last cart moving, if no luggage is transferred.

Now, the output may load luggage for two belts to the same space 32. This may be advantageous if the output has fewer belts which then need repositioning from feeding luggage to one space and until being able to feed luggage to another space 32.

Now, the carts may have sensors for also positioning relative to other carts. The same sensor types may be used, but now a cart may be configured to position itself and its belt(s) vis-a-vis another cart.

This optimization may be increased. The order of the luggage on the belt 221 may be controlled so that the luggage fed on to the belt 321 may be optimized to the length of the belt 321. Thus, if the length of the individual pieces of luggage is known, these may be grouped into individual groups for each belt 321 so that as much as possible of the belt length is utilized. If short pieces of luggage are provided, these may be used for filling the belts or may be provided on a belt of their own, which belt may then hold more pieces of luggage than belts holding larger pieces of luggage.

The ordering may be provided even at the overall belt 20, if provided, so that the luggage is fed to the belt 221 in the desired order. Alternatively, if a single belt 221 is used, the belt 221 may feed individual pieces of luggage to different belts 221 in a predetermined order so as to achieve as much optimization as possible.

Another advantage may be seen if the weight of the individual pieces of luggage is known. In this situation, the cart may be more balanced by moving the belts slightly in one or the other direction, whereby the centre of weight of the luggage on that belt may be shifted in relation to the luggage on the other belts and the cart. In that manner, the belts may be moved so as to centre the weight thereof so that the cart is able to move also around corners at higher speeds without risking tipping over. Naturally, the amount to which a belt may move will depend on where the luggage is positioned on that belt. These positions, however, may be determined from the movement of the belt during receipt of the luggage.

Yet another advantage may be seen when the size, weight, type or destination, for example, of the luggage is known. In that situation, the luggage may be fed on to the cart or to a particular belt according to this parameter. Heavy luggage may be desired provided at lower belts, larger pieces of luggage may be desired unloaded first in order for these to be stacked at lower positions than smaller pieces of luggage in the aircraft, for example. Knowing the parameters of the individual pieces of luggage as well as their position on the belts allows a certain selection of which luggage with which parameters to unload first.

Naturally, this may be taken into account even at loading of the cart so that the luggage is positioned so that it may be unloaded in the desired order.

Naturally, the parameters of the luggage may be transferred from the output 22 to the cart 30 and further to the ramp 42 and/or airplane 40. In this manner, the ID of the passenger, the priority of the luggage, the destination, the colour, size, weight, shape or the like of the luggage may be stored and transferred. Such parameters may be determined visually or by suitable sensors, such as a scale, an RFID or bar code reader if the information is embedded in a RFID tag or bar code (or any other technology such as NFC) of the luggage.

Then, it may be ascertained that all luggage is on the plane, has been unloaded, has been received, has been delivered or the like. It may be ascertained that no luggage is left on the plane, has fallen of a cart or has not been received from the output 22.

In fact, even from the shape or colour of the luggage, it may be ascertained that all luggage is on board, as the order in which the luggage is transported in the system 20 and via the belt 221 may be determined. Then, it will be possible to see if a piece of luggage has gone missing as that size would be missing in the sequence.

## Claims

1. A system for handling pieces of luggage, the system comprising:
- a delivery system comprising at least one first luggage moving element for transporting a number of pieces of luggage in a first direction,
- a cart comprising a second luggage moving element having a predetermined length and being positioned so as to receive pieces of luggage from the first luggage moving element, the cart being configured to move in relation to the delivery system so as to transport received luggage,
- a controller configured to synchronize the speed of the first and second luggage moving elements to control a distance between adjacent pieces of luggage on the second luggage moving element.

2. A system according to claim 1, wherein the controller is configured to control the movement of the second moving element so that the second luggage moving element does not move when the first luggage moving element moves and where no luggage is transferred from the first to the second luggage moving element.

3. A system according to any of the preceding claims, wherein the controller is configured to control the second luggage moving element to move at a lower speed than a speed with which the first luggage moving element moves.

4. A system according to any of the preceding claims, wherein the controller is configured to brake the second luggage moving element when luggage is transferred from the first luggage moving element to the second luggage moving element.

5. A system according to any of the preceding claims, wherein the delivery system comprises a first detector configured to detect luggage.

6. A system according to any of the preceding claims, wherein the cart comprises a second detector configured to detect presence and/or a position of one or more pieces of luggage on the second luggage moving element.

7. A system according to any of the preceding claims, wherein the controller is configured to control the first and second luggage moving elements to obtain a distance between adjacent pieces of luggage no more than 10cm.

8. A system according to any of the preceding claims, wherein the cart is configured to move, relative to a predetermined coordinate system in one direction along a first axis and the delivery system is configured to move in another direction along another axis not parallel to the first axis.

9. A loader/unloader comprising:
- a base,
- a first luggage moving element,
- an actuator configured to move the first luggage moving element relative to the base,
- a sensor for detecting a relative position between the first luggage moving element and a second luggage moving element,
- a controller configured to receive an output of the sensor and activate the actuator to move the first luggage moving element toward the second luggage moving element.

10. An assembly of the loader/unloader according to claim 9 and a cart comprising the second luggage moving element, wherein the controller is configured to output controlling information and the cart is configured to receive the controlling information and control the cart to move so as to bring the second luggage moving element toward the first luggage moving element.

11. A method of handling pieces of luggage, the method comprising:
- a first luggage moving element transporting a number of pieces of luggage in a first direction,
- a second luggage moving element, provided on or at a cart, receiving the pieces of luggage from the first luggage moving element while a controller synchronizes the speed of the first and second luggage moving elements to control a distance between adjacent pieces of luggage on the second luggage moving element,
- subsequently, the cart moving in relation to the delivery system so as to transport received luggage.

12. A method according to claim 11, wherein the controller controls the movement of the second moving element so that the second luggage moving element does not move when the first luggage moving element moves and where no luggage is transferred from the first to the second luggage moving element.

13. A method according to claim 11 or 12, wherein the controller controls the second luggage moving element to move at a lower speed than a speed with which the first luggage moving element moves.

14. A method according to any of claims 11-13, wherein the controller brakes the second luggage moving element when luggage is transferred from the first luggage moving element to the second luggage moving element.

15. A method according to any of claims 11-14, wherein the synchronizing step comprises a first detector detecting luggage at or on the first luggage moving element.

16. A method according to any of claims 11-15, wherein the synchronizing step comprises a second detector detecting presence and/or a position of one or more pieces of luggage on the second luggage moving element.

17. A method according to any of claims 11-16, wherein the controller controls the first and second luggage moving elements to obtain a distance between adjacent pieces of luggage no more than 10cm.

18. A method according to any of claims 11-17, wherein, prior the transporting step, the cart moves, relative to a predetermined coordinate system in one direction along a first axis and the delivery system moves in another direction along another axis not parallel to the first axis.

19. A method of operating a loader/unloader comprising:
- a base,
- a first luggage moving element, and
- a sensor,
the method comprising:
- the sensor for detecting a relative position between the first luggage moving element and a second luggage moving element and
- moving the first luggage moving element toward the second luggage moving element.

20. A method according to claim 19, where the second luggage moving element is provided on a cart, the method further comprising the step of the loader/unloader outputting controlling information and the cart receiving the controlling information and the cart moving so as to bring the second luggage moving element toward the first luggage moving element.
